# EUROPÄISCHE PATENTSCHRIFT

(11) **EP 2 760 288 B1**
(45) Veröffentlichungstag und Bekanntmachung des Hinweises auf die Patenterteilung: **07.06.2023**
(21) Anmeldenummer: 12753928.6
(22) Anmeldetag: 17.08.2012
(51) Int. Cl.: A21B 1/48, A21B 5/02, A21B 1/28

(54) **BACKAUTOMATENANLAGE**
AUTOMATIC BAKING SYSTEM
INSTALLATION DE CUISSON AUTOMATISÉE

(30) Priorität: 28.09.2011 DE 102011054018
(43) Veröffentlichungstag der Anmeldung: 06.08.2014
(73) Patentinhaber: Hebenstreit GmbH, 64546 Mörfelden-Walldorf (DE)
(72) Erfinder: ENGELMANN, Michael, 65474 Bischofsheim (DE)
(74) Vertreter: Habermann Intellectual Property Partnerschaft von Patentanwälten mbB
(86) Internationale Anmeldenummer: PCT/EP2012/066145
(87) Internationale Veröffentlichungsnummer: WO 2013/045175

(56) Entgegenhaltungen:
- WO-A1-2004/026034
- WO-A1-2008/003869
- AT-B- 278 289
- DE-A1-102007 016 016
- DE-C- 605 634
- GB-A- 646 550
- GB-A- 875 026
- JP-A- H0 530 886
- US-A- 1 615 345
- US-A- 5 127 392
- US-A- 5 906 485
- US-A1- 2005 236 385
- KELLNER C ET AL: "Markteinführung des Porenbrenners - Prozesswärme in neuer Dimension", INTERNET CITATION, 1 January 2005 (2005-01-01), XP002440186, Retrieved from the Internet: URL:www.promeos.com/cms/upload/download/pr omeos_gaswaerme_industrieanwendungen.pdf [retrieved on 2021-09-28]
- "Neue Heizmethode für Transportgiesspfannen", GIESSEREI,, vol. 95, no. 2, 5 February 2008 (2008-02-05), page 97, XP001571025, ISSN: 0016-9765

## Beschreibung

Die Erfindung betrifft eine Backautomatenanlage mit mehreren Backgutträgern, insbesondere Backplatten, und mit einem Beheizungssystem zur Beheizung der Backgutträger in einem Gehäuse einer Backautomatenanlage, wobei das Beheizungssystem mehrere, beabstandet zueinander angeordnete, gasbetriebene Brenner aufweist, und wobei es sich bei den gasbetriebenen Brennern um Porenbrenner handelt.

Derartige Backautomatenanlagen werden beispielsweise zur automatisierten Herstellung von Waffeln oder dergleichen eingesetzt. Diese Backautomatenanlagen weisen üblicherweise eine innerhalb eines Gehäuses umlaufend angeordnete Backzangenkette auf, an der mehrere Backzangen befestigt sind. Jede dieser Backzangen ist mit jeweils zwei zusammenklappbaren Backplatten bestückt. Die Backzangen sind dabei so ausgestaltet, dass in einer Öffnungsstellung der Backzangen Teig auf eine der Backplatten aufgebracht werden kann und in einer Schließstellung der Backzangen die Backplatten den Teig umschließen und eine geschlossene Backform bilden, in welcher der Waffelteig zu einer Waffel ausgebacken werden kann.

Mit Hilfe des innerhalb der Backautomatenanlage angeordneten Beheizungssystems sollen die Backplatten möglichst homogen auf eine vorgebbare Temperatur erhitzt werden, um innerhalb der Backform einen gleichmäßigen Backvorgang zu gewährleisten. Das Beheizungssystem weist dabei üblicherweise mehrere beabstandet in Umlaufrichtung der Backplatten angeordnete gasbetriebene Brenner auf. Dabei weist jeder dieser gasbetriebenen Brenner mehrere Brennerdüsen auf, aus denen im Betrieb ein brennbares Gas-Luft-Gemisch austritt und in einem Abstand zu den Brennerdüsen verbrannt wird. Durch die bei der Verbrennung entstehende Wärme werden die umlaufenden Backplatten erhitzt.

Die Form und Größe der Backplatten hängt von dem jeweils herzustellenden Gebäck ab. Die zur Herstellung eines Gebäckstücks benötigte und von den gasbetriebenen Brennern bereitzustellende Wärmemenge hängt dabei von dieser Form und Größe der Backplatten sowie von dem verwendeten Teig und dem jeweils herzustellenden Gebäck ab. Zudem ist die zu beheizende Fläche von der Form und der Größe der Backformen abhängig, die von den Backplatten gebildet werden.

Die von den einzelnen Brennerdüsen bereitgestellte Wärmemenge kann in einem kleinen Bereich durch eine Anpassung des den Brennerdüsen zugeführten brennbaren Gas-Luft-Gemischs an die jeweiligen Anforderungen angepasst werden. Häufig ist aber eine über diese durch die Anpassung des bereitgestellten Gas-Luft-Gemischs hinausgehende Anpassung der Wärmemenge erforderlich. Zu diesem Zweck werden bei herkömmlichen Beheizungssystemen üblicherweise einzelne Brennerdüsen mit Hilfe geeigneter Verschlusskappen verschlossen, so dass diese Brennerdüsen keinen Beitrag zu der bereitgestellten Wärmemenge leisten. Die hierfür notwendige manuelle Umrüstung ist äußerst aufwändig und kostenintensiv.

Beispielsweise in DE 605 634 C ist ein Dampfbackofen beschrieben, bei welchem die Dampfrohre mit Brennerrohren beheizt werden. Die Brennerrohre sind zur Beeinflussung der Wärmeabgabe um eine horizontale Achse schwenkbar gelagert. Aus AT 278 289 B ist ein Backofen mit einer Gasheizung bekannt, bei welchem mehrere dreieckförmige Brennerkörper um eine vertikale Achse schwenkbar gelagert sind.

Die von den Brennerdüsen erzeugten Flammen werden auch von unvermeidbaren und bei der Planung der Backautomatenanlagen unvorhersehbaren, unter anderem vom Aufstellungsort abhängigen Luftbewegungen innerhalb des Beheizungssystems beeinflusst. Durch diese Luftbewegungen können die offenen Flammen beispielsweise in Richtung eines Seitenbereichs der Backplatten bewegt werden, so dass eine gleichmäßige und homogene Erhitzung der Backplatten nicht gewährleistet ist.

Porenbrenner sind einschließlich deren Vorteile und Nachteile im Bereich der Brennertechnik aus der Praxis bekannt. Beispielsweise aus WO 2008/003869 A1, US 5,906,485 A oder WO 2004/026034 A1 sind Beheizungssysteme für Backgutträger in einer Backautomatenanlage bekannt, die mehrere beabstandet zueinander angeordnete gasbetriebene Porenbrenner aufweisen. Die Porenbrenner können über die gesamte Brennfläche eine gleichmäßige Wärmeerzeugung ermöglichen, die weniger als bei einzelnen offenen Flammen von Luftbewegungen innerhalb des Beheizungssystems beeinflusst wird. Bei dem in der Druckschrift WO 2004/026034 A1 beschriebenen Beheizungssystem können die einzelnen horizontal gelagerten Porenbrenner sowohl um eine horizontale Achse verschwenkt als auch in unterschiedlichen Abständen zu den Backgutträgern angeordnet werden, um die zu den Backgutträgern abgestrahlte Heizleistung zu verändern und anpassen zu können.

Aufgabe der Erfindung ist es daher, eine Backautomatenanlage mit einem Beheizungssystem der eingangs genannten Gattung bereitzustellen, bei dem die bereitgestellte Wärmemenge einfach, kostengünstig und über einen weiten Wärmemengenbereich einstellbar und an unterschiedlich breite Backgutträger anpassbar ist.

Diese Aufgabe wird erfindungsgemäß dadurch gelöst, dass das Beheizungssystem eine Schwenkeinrichtung aufweist, die eine Schwenkbewegung der Porenbrenner in eine beliebige Richtung ermöglicht.

Die abgegebene Wärmemenge bzw. Flächenleistung solcher Porenbrenner, bei denen der Brennstoff innerhalb von Poren von Hochtemperaturkeramiken verbrannt wird, kann stufenlos über einen weiten Bereich vorgegeben werden. Auf diese Weise kann die abgegebene Wärmemenge einfach an die jeweiligen Anforderungen angepasst werden. Da hierbei kein vollständiges Verschließen einzelner Brennerelemente notwendig ist, werden auch die sonst üblicherweise auftretenden und durch den Verschluss einzelner Brennerdüsen verursachten Temperaturschwankungen im Heizbereich vermieden und eine gleichmäßige und homogene Erwärmung gewährleistet. Zudem können Porenbrenner in unterschiedlichen Größen und Formen hergestellt und in Beheizungssystemen von Backautomatenanlagen eingesetzt werden. Dadurch kann eine großflächige und äußerst homogene Wärmeabgabe erreicht werden.

Da bei der Verbrennung des Gas-Luft-Gemischs innerhalb der Porenbrenner keine offenen Flammen in dem Beheizungssystem auftreten, ist der Einfluss von Luftbewegungen innerhalb des Beheizungssystems auf die bereitgestellte Wärmemenge und den erhitzten Bereich der Backgutträger äußerst gering. Durch Luftbewegungen verursachte Temperaturschwankungen im Heizbereich werden durch den Einsatz von Porenbrennern weitestgehend vermieden.

Bei einer Verschwenkung um eine vertikale Achse können beispielsweise sowohl bei breiten Backplatten als auch bei schmaleren Backplatten die Porenbrenner so positioniert werden, dass die Wärme im Wesentlichen in dem für die Erwärmung der jeweiligen Backplatten vorteilhaften Bereich abgegeben wird. Die jeweils benötigte Wärmemenge kann durch die stufenlose Regelung der Flächenleistung der einzelnen Porenbrenner vorgegeben werden. Auf diese Weise werden Heizverluste vermieden, die durch Beheizen unnötiger Bereiche entstehen können. Dadurch kann die benötigte Brennstoffmenge reduziert werden.

Bei einer Verschwenkung um eine horizontale Achse kann beispielsweise in Außenbereichen der Backplatten eine größere Wärmemenge eingebracht werden als in einem mittleren Bereich der Backplatten, um gegebenenfalls auftretende Wärmeverluste über das Gehäuse zu kompensieren.

Werden beispielsweise mehrere Backautomatenanlagen nebeneinander aufgestellt und betrieben, so hat sich gezeigt, dass auf einander zugewandten Seiten verschiedener Backautomatenanlagen weniger Wärmeenergie über die Gehäuse der Backautomatenanlagen an die Umgebung abgegeben wird als auf einer einem Gang oder einer Außenwand des Gebäudes zugewandten Seite einer Backautomatenanlage. Werden schwenkbare Porenbrenner eingesetzt, kann die von den Porenbrennern bereitgestellte Wärmeenergie stärker in kühlere Bereiche einer Backautomatenanlage gerichtet werden, um der in diesem Bereich auftretenden stärkeren Abkühlung entgegenzuwirken.

Eine auf einen vorgebbaren Bereich begrenzte und möglichst homogene Wärmeverteilung wird erfindungsgemäß dadurch erreicht, dass das Beheizungssystem eine Schwenkeinrichtung aufweist, die eine Schwenkbewegung in eine beliebige Richtung ermöglicht. Beispielsweise kann bei einer solchen Schwenkeinrichtung eine Lagerung der einzelnen Porenbrenner in jeweils drei Punkten vorgesehen sein, so dass durch eine Vorgabe eines Abstands der jeweiligen Lagerpunkte von einem Grundgerüst der Backautomatenanlage die Ausrichtung der einzelnen Backplatten in weiten Teilen vorgebbar ist.

Zudem kann die Wärmeverteilung dadurch weiter an die jeweiligen Anforderungen angepasst werden, dass die Porenbrenner verschiebbar gelagert sind. Auf diese Weise ist beispielsweise der Abstand benachbarter Porenbrenner vorgebbar. Es ist auch denkbar, dass die Porenbrenner den im Augenblick zu beheizenden Backplatten nachgeführt werden und im Anschluss an den Erhitzungsvorgang an ihre Ausgangsposition zurückgeführt werden, um daraufhin die nachfolgenden Backplatten zu erhitzen.

Bei einer anderen vorteilhaften Ausgestaltung des Beheizungssystems ist vorgesehen, dass die Schwenkeinrichtung ein feststellbares Kugelkopfgelenk aufweist. Durch den Einsatz eines solchen Kugelkopfgelenks können die Positionen der einzelnen Porenbrenner einfach und genau vorgegeben werden.

Durch die schwenkbare Lagerung der Porenbrenner kann die damit erzeugte Heizwirkung an die jeweils vor Ort vorherrschenden individuellen Gegebenheiten in einfacher Weise angepasst werden, um eine möglichst homogene Heizwirkung über den gesamten relevanten Bereich der Backplatten bzw. eines Backgutträgers während des Betriebs gewährleisten zu können. Da die individuellen Gegebenheiten vor Ort bei der Planung und Vormontage der Backautomatenanlage regelmäßig nicht bekannt sind oder nicht präzise genug erfasst werden können, könnte im Bedarfsfall eine derartige Anpassung durch Verschwenken der Porenbrenner vor Ort nicht im Voraus durch eine entsprechende Konstruktionsänderung vorweggenommen und überflüssig gemacht werden.

Um die einzelnen Porenbrenner möglichst einfach verschieben zu können ist in einer vorteilhaften Ausgestaltung vorgesehen, dass das Beheizungssystem eine Laufschienenvorrichtung aufweist, auf der die Porenbrenner längs einer vorgebbaren Laufrichtung verschiebbar gelagert sind. Beispielsweise könnten die einzelnen Porenbrenner auf Rollen in diesen Laufschienen geführt werden.

Zur Befestigung der Porenbrenner, der Laufschienen bzw. der Schwenkeinrichtungen ist in einer vorteilhaften Ausgestaltung vorgesehen, dass das Beheizungssystem einen Tragrahmen aufweist, an dem die Porenbrenner festlegbar sind.

Um die Position sämtlicher Porenbrenner gleichzeitig an die jeweiligen Anforderungen anpassen zu können ist vorgesehen, dass der Tragrahmen bewegbar an einem Grundgestell der Backautomatenanlage festgelegt ist. Auf diese Weise ist es beispielsweise möglich, die Lage der einzelnen Porenbrenner zunächst grob für alle Porenbrenner gemeinsam durch die Position des Tragrahmens vorzugeben und anschließend die Position der einzelnen Porenbrenner bezüglich der spezifischen Anforderungen beispielsweise mit Hilfe der Schwenkeinrichtungen oder einer Laufschienenvorrichtung fein zu justieren.

Zur einfachen und schnellen Positionierung der einzelnen Porenbrenner ist vorteilhafterweise vorgesehen, dass das Beheizungssystem mindestens eine steuerbare Antriebsvorrichtung aufweist, mit der die Porenbrenner und/oder der Tragrahmen verlagert werden können. Auf diese Weise kann die Position der Porenbrenner einfach über eine entsprechende Steuerungseinrichtung vorgegeben werden.

Um die Position der Porenbrenner auch automatisiert beispielsweise in Abhängigkeit einer vorgebbaren Temperatur justieren zu können ist erfindungsgemäß vorgesehen, dass das Beheizungssystem eine Sensoreinrichtung zur Erfassung von Prozessparametern des Beheizungssystems und eine datenübertragend mit der Sensoreinrichtung verbundene Regelungseinrichtung aufweist. Die Positionierung kann dabei von der Regelungseinrichtung beispielsweise durch entsprechende Antriebsvorrichtungen vorgenommen werden.

Als Antriebsvorrichtungen kommen unter anderem elektromagnetische, elektromotorische, elektropneumatische und elektrohydraulische Antriebssysteme in Frage.

Das vorangehend beschriebene Beheizungssystem kann bei einer Vielzahl von Backautomatenanlagen unterschiedlicher Größe eingesetzt werden.

Durch den Einsatz von Porenbrennern in dem Beheizungssystem einer Backautomatenanlage kann eine gleichmäßige und homogene Erhitzung der Backgutträger erreicht werden. Da Porenbrenner keine offenen Flammen aufweisen, kann die Wärme zudem unabhängig von gegebenenfalls auftretenden und von dem jeweiligen Aufstellungsort abhängigen Luftbewegungen innerhalb des Beheizungssystems bereitgestellt werden.

Gleichwohl kann auf eine beispielsweise durch den Aufstellungsort bedingte notwendige unterschiedliche Beheizung verschiedener Bereiche der Backgutträger nur bedingt durch eine Regulierung der abgegebenen Wärmemenge reagiert werden. Zudem ist eine Anpassung an Größe und Form der Backgutträger nicht mehr durch einen einfachen Verschluss einzelner Brennerdüsen möglich.

Es hat sich daher herausgestellt, dass für den vorteilhaften Einsatz von Porenbrennern in Beheizungssystemen von Backautomatenanlagen zusätzlich entsprechende Verlagerungsvorrichtungen der Porenbrenner vorgesehen werden sollten. Je nach Größe der Anlage und Einsatzzweck kommen dabei Kombinationen der verschiedenen vorangehend beschriebenen Verlagerungsvorrichtungen beispielsweise zur Schwenkung der Porenbrenner um eine horizontale oder vertikale Achse oder auch in eine beliebige Richtung sowie zur Verschiebung der Porenbrenner in Frage.

Weitere Einzelheiten der Erfindung werden anhand der in der Zeichnung dargestellten Ausführungsbeispiele näher erläutert.

Es zeigt:
Fig. 1 eine schematische Darstellung eines Ausschnitts einer Backautomatenanlage,
Fig. 2a eine schematisch dargestellte Draufsicht eines Ausschnitts eines Beheizungssystems,
Fig. 2b die in Fig. 2a dargestellte Draufsicht bei einer anderen Position der Porenbrenner,
Fig. 3 eine schematisch dargestellte Seitenansicht eines Ausschnitts eines Beheizungssystems.

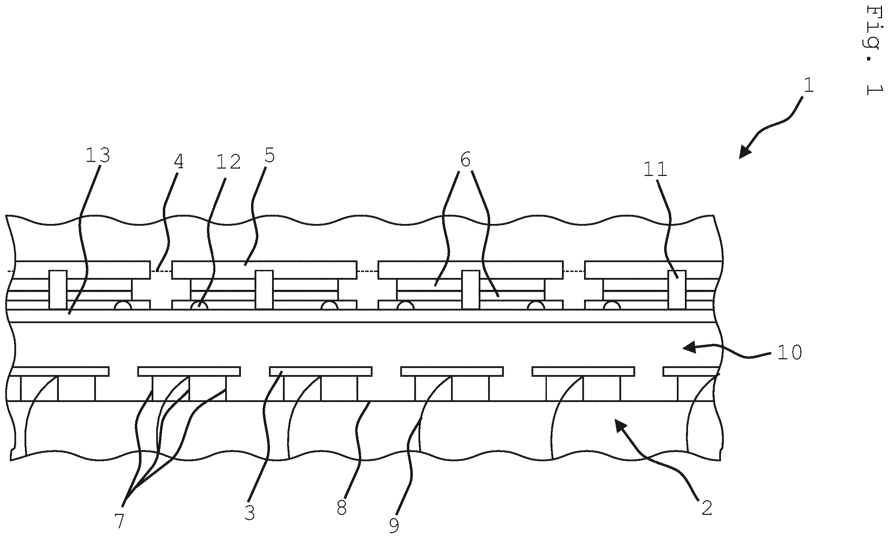

Fig. 1 zeigt eine schematische Darstellung eines Ausschnitts einer Backautomatenanlage 1. Die Backautomatenanlage 1 weist ein Beheizungssystem 2 mit mehreren Porenbrennern 3 zur Beheizung mehrerer an einer Backzangenkette 4 beabstandet zueinander angeordneter Backzangen 5 auf, wobei jede Backzange 5 jeweils zwei Backplatten 6 aufweist.

Die Porenbrenner 3 sind auf einer Schwenkeinrichtung 7 schwenkbar gelagert, wobei die Schwenkeinrichtung 7 an einem Tragrahmen 8 festgelegt ist. Die Porenbrenner 3 werden über eine Gaszuführvorrichtung 9 mit einem Gas-LuftGemisch versorgt und heizen den Backraum 10 auf ca. 180°C auf. Die Porenbrenner 3 erreichen Temperaturen von bis zu 1400°C. Die von den Porenbrennern 3 bereitgestellte Flächenleistung kann stufenlos zwischen 150kW/m² und 3000kW/m² geregelt werden. Mit Hilfe der Schwenkeinrichtung 7 können die Porenbrenner 3 um eine horizontale und eine vertikale Achse geschwenkt werden.

Zwischen den Backplatten 6 befindet sich nicht dargestellte Teigmasse. Die Backzangen 5 sind durch Backzangenverschlüsse 11 verriegelt und lagern auf den Backzangenrollen 12 in Backzangenfahrschienen 13.

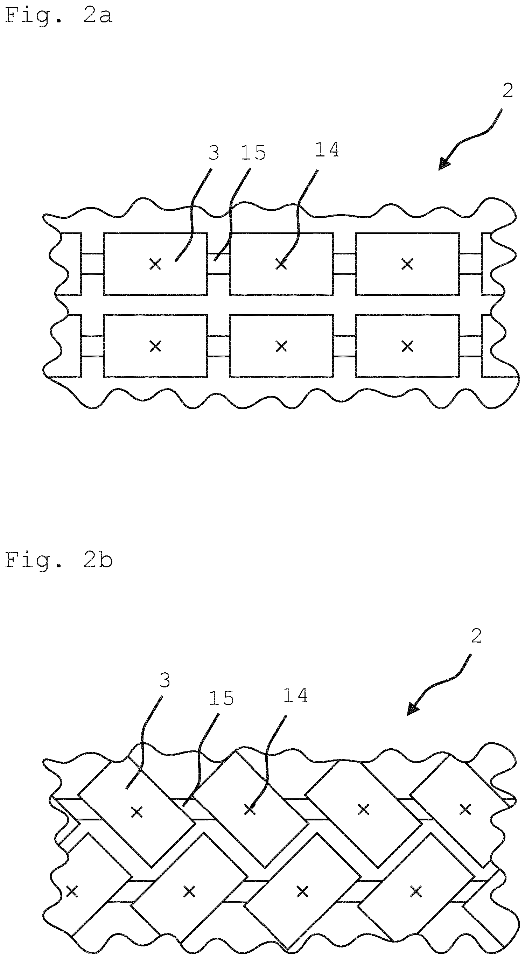

In Fig. 2a ist schematisch eine Draufsicht auf einen Ausschnitt eines Beheizungssystems 2 mit mehreren Porenbrennern 3 dargestellt. Die Porenbrenner 3 sind um eine vertikale in der Zeichnung durch ein Kreuz gekennzeichnete Achse 14 drehbar gelagert und längs der Laufrichtung der Laufschienenvorrichtung 15 verschiebbar.

In Fig. 2b sind die in Fig. 2a schematisch dargestellten Porenbrenner 3 um ihre vertikale Achse 14 geschwenkt und in Laufschienenvorrichtung 15 verschoben dargestellt. Die von den Porenbrennern 3 beheizte Fläche ist durch die Verlagerung der Porenbrenner 3 vergrößert worden. Da die Porenbrenner 3 im Vergleich zu der in Fig. 2a dargestellten Stellung der Porenbrenner 3 eine größere Fläche beheizen müssen, ist die von den Porenbrennern 3 bereitgestellte Wärmemenge entsprechend angepasst worden. Durch die Lagerung der Porenbrenner 3 kann die beheizte Fläche einfach an die Größe der nicht dargestellten verwendeten Backplatten angepasst werden.

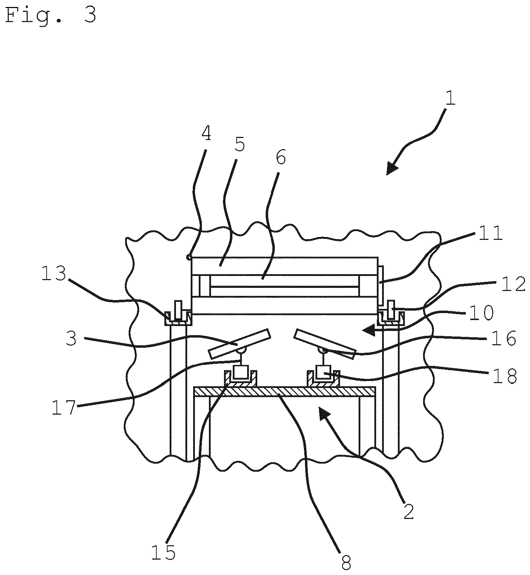

Fig. 3 zeigt eine schematisch dargestellte Seitenansicht eines Ausschnitts einer Backautomatenanlage 1, mit einer Backzange 5, wobei die Backzange 5 zwei Backplatten 6 aufweist. Die Backplatten 6 werden durch das Beheizungssystem 2 beheizt. Die Porenbrenner 3 sind auf einem Kugelkopfgelenk 16 in verschiedene Richtungen schwenkbar gelagert ist. Das Kugelkopfgelenk 16 ist über ein Verbindungselement 17 mit Laufrollen 18 verbunden, die in der Laufschienenvorrichtung 15 verschiebbar gelagert sind. Die Laufschienenvorrichtung 15 ist mit einem Tragrahmen 8 verbunden.

## Patentansprüche

1. Backautomatenanlage (1) mit mehreren Backgutträgern, insbesondere Backplatten (6), und mit einem Beheizungssystem (2) zur Beheizung der Backgutträger, in einem Gehäuse der Backautomatenanlage (1), wobei das Beheizungssystem (2) mehrere, beabstandet zueinander angeordnete, gasbetriebene Brenner aufweist, und wobei es sich bei den gasbetriebenen Brennern um Porenbrenner (3) handelt, **dadurch gekennzeichnet, dass** das Beheizungssystem (2) eine Schwenkeinrichtung (7) aufweist, die eine Schwenkbewegung eines jeden einzelnen der Porenbrenner (3) in eine beliebige Richtung ermöglicht.

2. Backautomatenanlage (1) gemäß einem der vorangehenden Ansprüche, **dadurch gekennzeichnet, dass** die Schwenkeinrichtung (7) ein feststellbares Kugelkopfgelenk (16) aufweist.

3. Backautomatenanlage (1) gemäß Anspruch 1 oder Anspruch 2, **dadurch gekennzeichnet, dass** das Beheizungssystem (2) eine Laufschienenvorrichtung (15) aufweist, auf denen die Porenbrenner (3) längs einer vorgebbaren Laufrichtung verschiebbar gelagert sind.

4. Backautomatenanlage (1) gemäß einem der voranstehenden Ansprüche, **dadurch gekennzeichnet, dass** das Beheizungssystem (2) einen Tragrahmen (8) aufweist, an dem die Porenbrenner (3) festlegbar sind.

5. Backautomatenanlage (1) gemäß Anspruch 4, **dadurch gekennzeichnet, dass** der Tragrahmen (8) bewegbar an einem Grundgestell der Backautomatenanlage (1) festgelegt ist.

6. Backautomatenanlage (1) gemäß einem der voranstehenden Ansprüche, **dadurch gekennzeichnet, dass** das Beheizungssystem (2) mindestens eine steuerbare Antriebsvorrichtung aufweist, mit der die Porenbrenner (3) und/oder der Tragrahmen (8) verlagert werden können.

7. Backautomatenanlage (1) gemäß einem der voranstehenden Ansprüche, **dadurch gekennzeichnet, dass** das Beheizungssystem (2) eine Sensoreinrichtung zur Erfassung von Prozessparametern des Beheizungssystems (2) und eine datenübertragend mit der Sensoreinrichtung verbundene Regelungseinrichtung aufweist.

## Claims

1. Automatic baking system (1) comprising a plurality of baking trays, in particular baking plates (6), and comprising a heating system (2) for heating the baking trays, in a housing of the automatic baking system (1), wherein the heating system (2) comprises a plurality of gas-operated burners arranged at a distance from one another, and wherein the gas-operated burners are porous burners (3), **characterised in that** the heating system (2) comprises a pivoting device (7), which enables a pivoting movement of each individual porous burner (3) in any direction.

2. Automatic baking system (1) according to one of the previous claims, **characterised in that** the pivoting device (7) comprises a lockable ball joint (16).

3. Automatic baking system (1) according to claim 1 or claim 2, **characterised in that** the heating system (2) comprises a slide rail device (15) on which the porous burners (3) are mounted displaceably along a predeterminable sliding direction.

4. Automatic baking system (1) according to any one of the previous claims, **characterised in that** the heating system (2) comprises a support frame (8) on which the porous burners (3) can be fixed.

5. Automatic baking system (1) according to claim 4, **characterised in that** the support frame (8) is fixed movably on a base frame of the automatic baking system (1) .

6. Automatic baking system (1) according to any one of the previous claims, **characterised in that** the heating system (2) comprises at least one controllable drive device, with which the porous burners (3) and/or the support frame (8) can be displaced.

7. Automatic baking system (1) according to any one of the previous claims, **characterised in that** the heating system (2) comprises a sensor device for detecting process parameters of the heating system (2) and a control device connected to the sensor device in a data-transmitting manner.

## Revendications

1. Installation automatique de cuisson (1) avec plusieurs supports de produits à cuire, notamment plaques de cuisson (6), et avec un système de chauffage (2) pour le chauffage des supports de produits à cuire, dans un boîtier de l'installation automatique de cuisson (1), le système de chauffage (2) présentant plusieurs brûleurs à gaz agencés à distance les uns des autres, et les brûleurs à gaz consistant en des brûleurs à pores (3), **caractérisée en ce que** le système de chauffage (2) présente un dispositif de pivotement (7), qui permet un mouvement de pivotement de chaque brûleur à pores individuel (3) dans une direction quelconque.

2. Installation automatique de cuisson (1) selon l'une quelconque des revendications précédentes, **caractérisée en ce que** le dispositif de pivotement (7) présente une articulation à tête sphérique (16) pouvant être immobilisée.

3. Installation automatique de cuisson (1) selon la revendication 1 ou la revendication 2, **caractérisée en ce que** le système de chauffage (2) présente un dispositif à rail de roulement (15) sur lequel les brûleurs à pores (3) sont montés de manière à pouvoir être déplacés le long d'une direction de roulement prédéfinissable.

4. Installation automatique de cuisson (1) selon l'une quelconque des revendications précédentes, **caractérisée en ce que** le système de chauffage (2) présente un cadre porteur (8) sur lequel les brûleurs à pores (3) peuvent être fixés.

5. Installation automatique de cuisson (1) selon la revendication 4, **caractérisée en ce que** le cadre porteur (8) est fixé de manière mobile à un châssis de base de l'installation automatique de cuisson (1).

6. Installation automatique de cuisson (1) selon l'une quelconque des revendications précédentes, **caractérisée en ce que** le système de chauffage (2) présente au moins un dispositif d'entraînement contrôlable, avec lequel les brûleurs à pores (3) et/ou le cadre porteur (8) peuvent être déplacés.

7. Installation automatique de cuisson (1) selon l'une quelconque des revendications précédentes, **caractérisée en ce que** le système de chauffage (2) présente un dispositif de détection pour détecter des paramètres de processus du système de chauffage (2) et un dispositif de régulation relié au dispositif de détection par transmission de données.
